(19) Europäisches Patentamt
European Patent Office
Office européen des brevets

(11) EP 0 776 575 B1

(12) # EUROPÄISCHE PATENTSCHRIFT

(45) Veröffentlichungstag und Bekanntmachung des Hinweises auf die Patenterteilung:
**29.12.1999 Patentblatt 1999/52**

(21) Anmeldenummer: **96914992.1**

(22) Anmeldetag: **26.04.1996**

(51) Int Cl.$^6$: **H04N 9/31**, G02B 15/14

(86) Internationale Anmeldenummer:
**PCT/EP96/01751**

(87) Internationale Veröffentlichungsnummer:
**WO 97/01248 (09.01.1997 Gazette 1997/03)**

(54) **Verfahren und Vorrichtung zur Videobildprojektion mit variabler Bildgrösse**

Method and apparatus for projection of video images at variable size

Méthode et appareil pour la projection d'images vidéo à largeur variable

(84) Benannte Vertragsstaaten:
**AT DE ES FI FR GB IT NL**
Benannte Erstreckungsstaaten:
**SI**

(30) Priorität: **22.06.1995 DE 19522698**

(43) Veröffentlichungstag der Anmeldung:
**04.06.1997 Patentblatt 1997/23**

(73) Patentinhaber:
- **CARL ZEISS JENA GmbH**
  **07745 Jena (DE)**
- **LDT GmbH & Co. Laser-Display-Technologie KG**
  **07552 Gera (DE)**

(72) Erfinder:
- **RÖDER, Rolf**
  **D-07747 Jena (DE)**
- **DETER, Christhard**
  **D-07546 Gera (DE)**

(74) Vertreter: **Geyer, Werner, Dr.-Ing. et al**
**Patentanwälte**
**Geyer, Fehners & Partner**
**Perhamerstrasse 31**
**80687 München (DE)**

(56) Entgegenhaltungen:
**DE-A- 4 324 849** **FR-A- 2 699 690**
- **PATENT ABSTRACTS OF JAPAN vol. 10, no. 338 (P-516), 15.November 1986 & JP,A,61 141434 (MINOLTA)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 776 575 B1

## Beschreibung

Die Erfindung bezieht sich auf ein Verfahren zum Abbilden von Bildpunkten eines Videobildes mit Hilfe eines bezüglich der Helligkeit der Bildpunkte intensitätsmäßig gesteuerten Lichtbündels, das abgelenkt und danach mit einer Linse oder einem Linsensystem auf einen Bildschirm geworfen wird. Ferner bezieht sich die Erfindung auf eine Vorrichtung, insbesondere zum Durchführen des Verfahrens und speziell zum Abbilden von Bildpunkten eines Videobildes auf einem Bildschirm mit einer Ablenkeinrichtung, die ein bezüglich der Helligkeit der Bildpunkte intensitätsmäßig angesteuertes Lichtbündel zum zeilen- und bildmäßigen Rastern auf einen Bildschirm ablenkt, und mit einer Linse oder einem Linsensystem zwischen der Ablenkeinrichtung und dem Bildschirm.

Die Bildgröße ist bei der herkömmlichen Videotechnik mit Bildröhren aufgrund des hohen Aufwands sehr begrenzt. Zum Erzeugen sehr großer farbiger Videobilder kann man aber von anderen aus der Literatur bekannten Techniken Gebrauch machen. In einem Artikel in der Funkschau 1970, Heft 4, Seiten 69 ff., oder nach der EP-A-0 084 434 werden beispielsweise Geräte beschrieben, bei denen drei verschiedenfarbige von Lasern erzeugte Lichtbündel intensitätsmäßig mit Lichtmodulatoren moduliert und über ein Spiegelsystem zu einem gemeinsamen Lichtbündel zusammengefaßt werden, das mechanisch mit Hilfe eines Spiegelsystems gerastert und auf einen Bildschirm projiziert wird.

Im professionellen Anwendungsbereich werden auch heute schon Großbildprojektoren eingesetzt, die aber auf einem anderen Abbildeprinzip beruhen. Unabhängig vom technischen Prinzip ergibt sich jedoch bei Großbildprojektoren die gleiche Anforderung für die Bildgröße: Wegen ihres hohen Preises werden diese selten fest installiert, sondern für spezielle Fälle von Verleihfirmen ausgeliehen. Derartige Großbildprojektoren müssen daher für viele Anwendungsfälle variabel gehalten werden. In der Praxis sollten derartige Geräte sowohl in kleinen Kinos als auch in Fußballstadien einsetzbar sein. Deswegen besteht hier ein großer Bedarf für eine vanable Bildgröße.

Allerdings gibt es für die beschnebene Abbildung eines Videobildes mit Laserlichtbundeln dafür bisher keine befriedigende Lösung. Eine Vergrößerung oder Verkleinerung der Bildgröße kann zwar beispielsweise mit einer mechanischen Anderung oder einem Austausch der Ablenkeinrichtung erreicht werden, dies ist aber kompliziert und teuer. Vor allem ist diese Möglichkeit für Großprojektionsgeräte, die an verschiedene Veranstalter ausgeliehen werden, nicht praxisgerecht, da Betreibern mit meist geringen technischen Fähigkeiten ein ständiges Nachjustieren der Spiegel bezuglich des jeweiligen Anwendungsfalls am Einsatzort kaum zugemutet werden kann.

Zum Vergrößern des Videobildes bei mit der Lasertechnik arbeitenden Videogeräten wurde in der DE-A-43 24 849 vorgeschlagen, daß ein im wesentlichen afokales Linsensystem verwendet wird, mit dem sich das Bildfeld aufweiten läßt. Mit Hilfe dieses Linsensystems ist beispielsweise eine flachere Bauart derartiger Videosysteme möglich. Bei dem in dieser Druckschrift beschriebenen Linsensystem ist die Vergrößerung aber festgelegt, da es vor allem darauf ausgelegt ist, eine Vergrößerung bei minimalen Farbfehlern und Verzeichnungen zu erreichen. Da das Linsensystem auf die Verringerung von Abbildungsfehlern optimiert ist, ist kaum anzunehmen, daß man beispielsweise durch Variation der Abbildungseigenschaften eines Teilsystems dieses Optimum einhalten kann. Deswegen sollte nach einer anderen Lösung gesucht werden.

Zur Veränderung des Winkels eines ausfallenden Lichtstrahls relativ zum einfallenden Lichtstrahl sind auch f-($\theta$) Linsen bekannt, bei denen die Winkeländerung nach einer vorgegebenen Funktion f erfolgt. In der Technik werden beispielsweise Linsen eingesetzt, die für die Winkeländerung eine Tangensfunktion verwenden, um eine gleichmäßige Winkelablenkung für ein gleichmäßiges Rastern in einer Ebene zu transformieren

Eine Vergrößerung ist allerdings mit Hilfe derartiger Optiken nicht möglich. Vor allem hat eine in der DE-A-43 24 849 angegebene Analyse gezeigt, daß sich derartige f($\theta$)-Linsen innerhalb akzeptabler Toleranzen nicht verzeichnungsfrei und gleichzeitig farbfehlerfrei konstruieren lassen, was darauf hindeutet, daß zur variablen Veränderung der Bildgröße für die Videotechnik in Verbindung mit f($\theta$)- Linsen keine Anregung gefunden werden kann.

Aus dem Stand der Technik sind Varioobjektive zum Einsatz bei Fotoapparaten oder Filmprojektoren bekannt. Allerdings sind diese nur zur Abbildung eines flächigen Bildes auf einen Bildschirm, wie bei der Vergrößerung eines Dias auf einer Leinwand, geeignet. Bei Videosystemen oder Laserdruckern ist jedoch die Umsetzung eines Winkels, der durch die Ablenkung der Spiegel der Ablenkeinrichtung erzeugt wird, in eine Auslenkung auf einem ebenen Bildschirm nötig. Man müßte also erst das Bild mit einer f( $\theta$)- Linse in ein Bild umformen, ehe man es der Projektion durch ein bekanntes Varioobjektiv unterwirft. Wie in der DE-A-43 24 849 ausgeführt wurde, läßt sich dies nicht verzeichnungsfrei und gleichzeitig farbfehlerfrei durchführen.

Zusammenfassend ist daher festzustellen, daß es bisher keinen befriedigenden Lösungsansatz für eine variable Veränderung der Bildgröße bei Laservideosystemen gibt. Die variable Bildgrößenverstellung ist jedoch insbesondere für den flexiblen Einsatz von Videogeräten im professionellen Einsatzbereich für unterschiedliche räumliche Gegebenheiten notwendig.

Aufgabe der Erfindung ist es, für Abbildungen von Videobildern mit Hilfe eines abgelenkten Lichtbündels ein Verfahren und eine Vorrichtung zu schaffen, das bzw. die eine Änderung der Bildgröße in einfach handhabbarer Weise ermöglicht.

Die Aufgabe wird, ausgehend vom eingangs genannten Verfahren, dadurch gelöst, daß für die Linse, das Linsensystem oder ein Teillinsensystem des Linsensystems eine variable Brennweite vorgesehen wird und bei Variation der Brennweite ein dingseitiger Brennpunkt ortsfest gehalten wird.

Das erfindungsgemäße Verfahren verwendet damit aus der Technik bekannte Linsensysteme oder Linsen mit variabler Brennweite, wie Variosysteme oder Gummilinsen. Allerdings werden diese in einer neuen Art und Weise betrieben, indem die Lage des Brennpunktes auch bei Veränderung der Brennweite definiert festgehalten wird. Damit wird erreicht, daß durch die Ablenkeinrichtung erzeugte Winkeländerung für eine Abbildung auf einem Bildschirm in geeigneter Weise vergrößert oder verkleinert wird.

Die Wirkung des Verfahrens wird aus folgender Naherungsbetrachtung deutlicher. Aufgrund der großem Abstande bei der oben dargestellten Videoprojektion kann das Linsensystem in erster Näherung als dünne Linse gemäß der Linsengleichung betrachtet werden. Näherungsweise läßt sich also die bekannte Linsenformel anwenden:

$$1/f=1/g+1/b,$$

in der f die Brennweite, g die Gegenstandsweite und b die Bildweite bezeichnen. Bei sehr großer Bildweite b kann der Term mit 1/b in erster Näherung vernachlässigt werden, so daß sich g als ungefähr f ergibt. Bei Veränderung von f ändert sich damit auch g. Die Bildgröße hängt dann aufgrund des zweiten Strahlensatzes von f ab, wobei die Abbildungseigenschaften bezüglich Schärfe und Verzeichnungen aber gleichbleiben. Die Beziehung g ungefähr f sagt außerdem aus, daß sich der Brennpunkt auch bei unterschiedlichem f immer am gleichen Ort befindet.

Aus der Näherung ist zwar das Abbildungsprinzip verständlich, man muß sich aber vor Augen halten, daß die Näherung nur sehr grob ist. Deswegen ist a priori nicht zu erwarten, daß die Bildqualität gleich bleibt. Modellrechnungen haben aber gezeigt, daß man aufgrund dieses Prinzips in einfacher Weise auch Optiken zur Veränderung der Bildgröße konstruieren kann, die eine hervorragende Bildqualität liefern. Dies wird im folgenden anhand der Weiterbildungen der Erfindung noch näher ausgeführt.

Aus der angegebenen Näherung wird auch deutlich, daß diese den praktischen Bedingungen um so besser angepaßt ist, je kleiner der Raumbedarf für die Linse oder das Linsensystem zur Änderung der Bildgröße ist, da die Näherung davon abhängt, daß die Größe des Linsensystems vernachlässigt werden kann. Ein aufgrund der Erfindung konstruienes Linsensystem ist deshalb gunstigerweise äußerst kompakt, was bei verleihbaren Großprojektionsgeräten einen wesentlichen Vorteil, insbesondere bei der Verpackung, bringt, da diese häufig an unterschiedlichen Orten installiert werden müssen.

Wie aus der Näherung auch deutlich wird, hat das auf einem Bildschirm dargestellte Bild eine höhere Qualität, wenn die Bildinformation am festgehaltenen Brennpunkt besonders gut definiert ist Deshalb ist bei einer vorzugsweisen Weiterbildung der Erfindung vorgesehen, daß der ortsfest gehaltene dingseitige Brennpunkt innerhalb eines räumlich ausgedehnten Bereichs, in dem die Ablenkung erfolgt, oder bei einem Teillinsensystem in einer Ebene im Strahlengang des Linsensystems, in dem das Lichtbündel fokussiert ist, festgehalten wird.

Bei der angegebenen Weiterbildung ist allerdings nicht die Lage des Brennpunkts im Punkt der Ablenkung gefordert, da es einen derartigen Punkt bei einem in zwei Richtungen unabhängigen Rastern, wie bei Videobildern nicht gibt, sondern sich dabei die Ablenkung innerhalb eines aufgrund des sowohl bildmäßigen als auch zeilenmäßigen Rasterns gegebenen räumlich ausgedehnten Bereichs vollzieht.

In diesem räumlich gut definierten Bereich ist der Bildinhalt lokal besonders gut aufgrund des definierten Winkels beim Ablenken bestimmt, so daß sich dieser Bereich zum Festhalten des dingseitigen Brennpunkts der Linse, des Teillinsensystems oder des Linsensystems variabler Brennweite besonders gut eignet. Bei einer Alternative gemäß einer bevorzugten Weiterbildung, bei der die Lichtbündel in einer Ebene gut fokussiert sind, ist schon aufgrund der angegebenen Definition der Ebene über die Fokussierung des Lichtbündels eine gute Bildqualität gegeben. Dieses Bild wird dann auf dem Bildschirm in anderer Größe wiedergegeben. In beiden Fällen wird eine sehr gute Bildqualität erreicht.

Die Bedeutung der Merkmale erkennt man deutlich, wenn man die einfachste durch die Verfahrensmerkmale mögliche Optik eingehender betrachtet:

Die einfachste mögliche Optik ist die Anordnung eines Varioobjektivs mit dem dingseitigen Brennpunkt an dem Punkt, in dem die Ablenkung stattfindet. Jeder von diesem Punkt ausgehende Lichtstrahl wird in einen vom Varioobjektiv ausgehenden Lichtstrahl parallel zur optischen Achse des Varioobjektivs überführt, wobei der Abstand von der optischen Achse durch den Winkel bestimmt ist. Aus geometrischen Gründen ist dieser Abstand auch von der Brennweite abhängig. Das bedeutet, bei festgehaltener Brennweite wird die im gerasterten Lichtbündel enthaltene Information als Bild dargestellt, das unabhängig vom Abstand des Schirms eine konstante Größe aufweist. Bei Veränderung der Brennweite, aber wenn der Brennpunkt weiter in der definierten Position der Ablenkeinrichtung bleibt, führen die geometrischen optischen Beziehungen zu einer Veränderung der Bildgröße.

Das so entstehende Bild kann dann mit weiteren Objektiven oder Linsensystemen aus dem Stand der Technik

mit fester Vergrößerung weiter vergrößert werden.

Es gibt aber auch andere Möglichkeiten zur Verstellung der Vergrößerung, bei denen ein komplexeres Linsensystem verwendet wird. Beispielsweise kann man mit einer einzelnen Linse oder einem Linsensystem ein festes Bild aus parallel zur optischen Achse verlaufenden Lichtbündeln erzeugen, das dann mit klassischen Mitteln wie bei den in Diaprojektoren eingesetzten Varioobjektiven vergrößert wird. Die Forderung, daß der Brennpunkt der nachfolgenden Optik in dieser Zwischenbildebene liegen soll, weist jedoch von diesen klassischen Varioobjektiven weg und führt zu einer unterschiedlichen Konstruktion, die allerdings erfahrungsgemäß dazu führt, daß die gesamte Optik bezüglich hoher Verzeichnungsfreiheit und geringer chromatischer Fehler korrigiert werden kann.

Die Erfindung ermöglicht also nicht nur eine in weiten Grenzen einstellbare Vergrößerung, beispielsweise zur Anpassung eines Videogerätes an unterschiedliche Raumbedingungen, sondern erlaubt auch die gleichzeitige Darstellung der Bilder mit einer hohen Wiedergabequalität.

Man könnte zur Durchführung des Verfahrens ein spezielles Linsensystem variabler Brennweite einsetzen, bei dessen Konstruktion vorgegeben wird, daß der dingseitige Brennpunkt bei Veränderung der Brennweite ortsfest bleibt. Diese Randbedingung erschwert allerdings die Konstruktion eines entsprechenden Videosystems.

Gemäß einer bevorzugten Weiterbildung der Erfindung ist dagegen vorgesehen, daß der dingseitige Brennpunkt ortsfest gehalten wird, indem die Linse, das Linsensystem oder das Teillinsensystem bei Veränderung der Brennweite in seiner Position verändert wird. Das Linsensystem mit der variablen Brennweite ist dabei konstruktiv weniger eingeschränkt und kann deshalb besser positionsunabhängig optimiert werden. Das Nachführen der Position bedeutet auch keinen wesentlich vergrößerten Aufwand. Damit läßt sich daher die Bildqualität in einfacher Weise erhöhen.

Eine Erfindung betrifft ferner eine Vorrichtung zur Durchführung des geschilderten Verfahrens und ist, ausgehend von der eingangs beschriebenen Vorrichtung, dadurch gekennzeichnet, daß die Linse, das Linsensystem oder ein Teillinsensystem des Linsensystems in der Brennweite verstellbar sind und eine Einrichtung vorgesehen ist, die bei Verstellung der Brennweite einen dingseitigen Brennpunkt der Linse oder des Teillinsensystems ortsfest hält.

Die mit der Linse und dem Linsensystem zusammenhängende Optik ist eingangs schon beim Verfahren dargestellt worden. Bei der Vorrichtung ist aber zusätzlich eine spezielle Einrichtung zum Festhalten des Brennpunkts an dem definierten Ort vorgesehen. Mit dieser Einrichtung spart man sich die Zweiteilung der Verfahrensschritte in Verstellung der Brennweite in einem ersten Schritt und anschließendem Führen des Brennpunkts auf den definierten Punkt in einem zweiten Schritt. Damit ergibt sich eine besonders leichte Anpassung der genannten Vorrichtung an die gewünschten Bedingungen. Für den professionellen Einsatz von Videogeräten läßt sich das Videosystem mit prinzipiell einer einzigen Handbewegung zur Veränderung der Brennweite an die räumlichen Bedingungen anpassen, da das definierte Festhalten des Brennpunkts bei entsprechender Ausgestaltung aufgrund der Einrichtung praktisch automatisch erfolgt.

Bei einer bevorzugten Weiterbildung der erfindungsgemäßen Vorrichtung hält die Einrichtung den dingseitigen Brennpunkt innerhalb eines Bereichs der Ablenkeinrichtung oder in einer Ebene im Strahlengang des Linsensystems, in dem das Lichtbündel fokussierbar ist, fest.

Die Vorteile dieser Weiterbildung der erfindungsgemäßen Vorrichtung sind vorstehend schon bezüglich einer Weiterbildung des Verfahrens eingehend dargestellt worden.

Zur Durchführung des Verfahrens oder für die Vorrichtung könnte man einen Revolver mit verschiedenen Linsen oder Linsensystemen vorsehen. Bei der Anordnung von Linsen in einem Revolver kann auch gleichzeitig berücksichtigt werden, daß die beim Verfahren und der Vorrichtung definierte Lage des Brennpunkts eingehalten wird. In diesem Fall ist die in der Vorrichtung verwendete Einrichtung auch mit Hilfe des Revolvers ausgebildet.

Diese konstruktive Lösung gestattet aber nur eine begrenzte Anzahl von Vergrößerungen, so daß die Anpassung an bestimmte räumliche Bedingungen zwar möglich ist, jedoch das Videobild den Bildschirm nicht immer vollständig ausfüllt. Man kann die Linsensysteme im Revolver zwar beliebig fein abstufen, man stößt aber sehr schnell bezüglich der Kosten an Grenzen, da die einzelnen Linsensvsteme für hohe Abbildungsqualität zweckmäßigerweise hochwertig ausgeführt sein sollten

Zum Verringern der Kosten bei gleichbleibender hoher Abbildungsqualität ist gemäß einer bevorzugten Weiterbildung der Erfindung vorgesehen, daß die Linse, das Linsensystem oder das Teillinsensystem des Linsensystems eine kontinuierlich verstellbare Brennweite aufweisen. Damit läßt sich die Bildgröße immer geeignet einstellen. Zudem ist dise Ausbildung auch kostengünstiger, da, wie bei Varioobjektiven nach dem Stand der Technik, für jede Vergrößerung die gleichen Linsen zum Einsatz kommen. Die Veränderung der Brennweite läßt sich beispielsweise bei Linsensystemen dadurch bewirken, daß Teillinsensysteme von diesen wie bei herkömmlichen Varioobjektiven gegeneinander verschoben werden.

Gemäß einer anderen bevorzugten Weiterbildung der Erfindung ist vorgesehen, daß das Linsensystem ein im wesentlichen afokales Linsensystem ist. Afokale Linsensysteme erlauben eine Abbildung, bei der ein eingangsseitig unter einem bestimmten Winkel einfallendes Lichtbündel in ein anderes, unter einem anderen Winkel ausfallendes Lichtbündel überführt wird, und bei der die Tangensfunktionen der beiden Winkel in einem festen, durch die Brennweiten einzelner Stufen gegebenen Verhältnis stehen. Dadurch ist es möglich, das Gesamtsystem verzeichnungsfrei und

mit minimalen chromatischen Fehlern auszugestalten.

Ein im wesentlichen afokales System ist deswegen für die hohe Bildqualität äußerst zweckmäßig. Ein afokales Linsensystem kann man beispielsweise durch zwei Teilsysteme verwirklichen, wobei der bildseitige Brennpunkt des ersten Teilsystems im dingseitigen Brennpunkt des zweiten Teilsystems liegt. Dann wird ein Lichtstrahl, der durch den dingseitigen Brennpunkt des ersten Teilsystems abgebildet wird, gemäß dem oben angesprochenen Verhältnis der Tangensfunktionen transformiert.

Wie eingangs schon erwähnt wurde, ist bei der zweidimensionalen Ablenkung bei den eingangs genannten Videosystemen aber nicht ein einziger Punkt zum Ablenken des Lichtbündels gegeben. Dagegen muß man den Betrachtungen einen durch die beiden orthogonalen Ablenkungen definierten räumlich ausgedehnten Bereich zur Ablenkung zugrunde legen. Dieser Abweichung von den idealen Bedingungen muß bei der Korrektur des optischen Systems Rechnung getragen werden, so daß der bildseitige Brennpunkt des ersten Teilsystems im Gegensatz zu herkömmlichen afokalen Linsensystemen nicht genau an dem gleichen Ort liegt wie der dingseitige Brennpunkt des zweiten Teilsystems. Das Linsensystem ist also damit kein afokales Linsensystem per definitionem. sondern macht sich nur die Abbildungsprinzipien zunutze. Deshalb wird ein derartiges Abbildungssystem hier als ein "im wesentlichen" afokales Linsensvstem bezeichnet.

Bei einer vorzugsweisen Weiterbildung der Erfindung ist das Linsensystem mehrstufig und die erste Stufe in konstantem Abstand zur Ablenkeinrichtung angeordnet, wobei mindestens eine der anderen Stufen eine variable Brennweite hat und gegenüber der ersten Stufe verschiebbar angeordnet ist.

Gemäß dieser Weiterbildung der Erfindung ist die erste Stufe in konstantem Abstand zur Ablenkeinrichtung angeordnet, bleibt also ortsfest. Die für die Erfindung notwendige Linse bzw. das entsprechende Teillinsensystem mit variabler Brennweite ist in einer anderen, nachfolgenden Stufe des Linsensystems verwirklicht. Dadurch steht ein größerer Bereich für die Vergrößerung bzw. Verkleinerung des Bildes zur Verfügung, da auf eine eventuelle räumliche Begrenzung aufgrund der Position der Ablenkeinrichtung keine Rücksicht genommen werden muß. Bei einem Videosystem, steht schon aus Gründen der geometrischen Optik ein größer Raum in Richtung der Bildfläche zur Verfügung als in Richtung der Ablenkeinrichtung.

Bei einer zusätzlichen Weiterbildung der Erfindung ist das Linsensystem so ausgestaltet, daß das Videobild vor der Linse oder vor dem Teillinsensystem mit der variablen Brennweite in eine Zwischenbildebene abbildbar und die Linse oder das Teillinsensystem mit der variablen Brennweite mit Hilfe der Einrichtung so verschiebbar ist, daß deren dingseitiger Brennpunkt im wesentlichen auf einer optischen Achse des Linsensystems nahe bei oder in der Zwischenbildebene liegt.

Aufgrund dieser Merkmale definieren die beim Rastern auftretenden unterschiedlichen Winkel durch die erste Linse Positionen von Bildpunkten in einer Zwischenbildebene. Dadurch kann man Varioobjektive nach dem Stand der Technik verwenden, wie sie beispielsweise zur Abbildung eines Dias auf eine Leinwand benutzt werden. Dann können bekannte Konstruktionen für die Entwicklung übernommen werden, was insbesondere den Preis senkt. Das ist im professionellen Anwendungsbereich besonders vorteilhaft denn dort tragen Entwicklungskosten wegen der geringen Stückzahlen zum Endpreis in nicht vernachlässsigbarer Weise bei

Weiter ist es, wie optische Modellrechnungen gezeigt haben, möglich ein derartiges Linsensystem nicht nur praktisch verzeichnungsfrei sondern auch frei von chromatischen Fehlern zu halten, wenn der dingseitige Brennpunkt in der Nähe oder innerhalb der Zwischenbildebene liegen. Die Weiterbildung erhöht also vor allem die Qualität von Farbvideobildern.

Gemäß einer vorzugsweisen Weiterbildung der Erfindung ist zwischen der Zwischenbildebene und dem Teillinsensystem mit variabler Brennweite eine Feldlinse oder Feldlinsengruppe angeordnet.

Aufgrund der Feldlinse läßt sich, wie später noch an einem Ausführungsbeispiel deutlicher wird, sowohl der Öffnungswinkel des Lichtes, das von der Zwischenbildebene kommt relativ zur optischen Achse verkleinern, als auch die Austrittspupille in das nachgeordnete Teillinsensystem verlegen.

Das der Feldlinse nachgeordnete Teillinsensystem mit variabler Brennweite bzw. das Varioobjektiv kann im allgemeinen in Richtung der optischen Achse nicht beliebig kurz gestaltet werden, so daß ohne Feldlinse der mögliche Vergrößerungs- oder Verkleinerungsfaktor beschränkt wäre. Die Feldlinse oder die Feldlinsengruppe ermöglicht dagegen für praktische Erfordernisse eine einfache Anpassung des Bereichs zur Auslenkung des Lichtbündels auf den Bildschirm.

Die Verlegung der Pupille in das nachgeordnete Teillinsensystem ermöglicht in einfacher Weise und mit geringem Aufwand eine Korrektur gegen Verzeichnungen.

Bei einer anderen bevorzugten Weiterbildung der Erfindung ist bei dem mehrstufigen afokalen Linsensystem die letzte Stufe als Linse oder Teillinsensystem mit variabler Brennweite ausgebildet.

Wie vorstehend schon erwähnt wurde, kommt es für die erreichbare Vergrößerung oder die Verkleinerung eines Videobildes unter anderem darauf an, wieviel Platz für die Anderung der variablen Brennweite zur Verfügung steht Man gewinnt zwar schon, wie vorhergehend beschrieben, dadurch genugend Raum, daß man die zweite oder höhere Stufe des Linsensystems mit einer variablen Brennweite ausstattet. Man muß aber die Anzahl der mechanischen Bewegungen von Teilstufen erhöhen. Dies wird gleich deutlich, wenn man beispielsweise die zweite Stufe bei einem mindestens dreistufigen System betrachtet: Bei Verstellung der Brennweite der zweiten Stufe gemäß der Erfindung muß auch die dritte Stufe mit verschoben werden.

Diese Notwendigkeit entfällt gemäß der Weiterbildung, da dabei nur die letzte Stufe für die Änderung der Brennweite eingerichtet ist. Man spart daher in vorteilhafter Weise mechanische Verstellvorrichtungen. Im allgemeinen enthalten diese speziell geschnittene Gewinde: Die Weiterbildung erlaubt deshalb auch, die Kosten für das Linsensystem zu senken, ohne daß Begrenzungen für die verfügbare Größenänderung des auf dem Bildschirm gerasterten Bereichs des Lichtbündels in Kauf genommen werden müssen.

Bei einer bevorzugten Weiterbildung der Erfindung weist das Teillinsensystem oder das Linsensystem variabler Brennweite zwei gegeneinander verschiebbare Systemstufen auf, mit denen die Brennweite verstellbar ist, und es ist ein Bewegungsmechanismus vorgesehen, der so ausgestaltet ist, daß der dingseitige Brennpunkt bei Änderung der Brennweite ortsfest bleibt

Dadurch, daß das Linsensystem nur zwei gegeneinander verstellbare Systemstufen aufweist, zeichnet es sich gegenüber anderen Linsensystemen durch besondere Einfachheit aus. Der Bewegungsmechanismus ist sehr einfach ausgebildet, weil der dingseitige Brennpunkt des Linsensystems ortsfest bleibt. Das bedeutet ebenfalls eine Vereinfachung des Linsensystems in einer erfindungsgemäßen Vorrichtung.

Die Weiterbildung der Erfindung gestaltet die Vorrichtung auch bedienungsfreundlich. Aufgrund des besonders ausgestalteten Bewegungsmechanismus ist nur eine Einstellung, nämlich die dieser Brennweite, nötig; die Position des Linsensystems variabler Brennweite muß nicht noch zusätzlich nachgestellt werden.

Bei einer anderen bevorzugten Ausgestaltung der Erfindung erfolgt die Bewegung der einen Systemstufe gegenüber der anderen Systemstufe mit Hilfe einer mechanischen Kurvensteuerung. Dadurch läßt sich die Brennweite bei ortsfestem dingseitigen Brennpunkt besonders einfach verstellen. Prinzipiell könnten die einzelnen Systemstufen zwar auch mit einem elektrischen Antneb und einer speziell für die vorstehend genannten Bedingungen abgestimmten Positionsregelung eingestellt werden. Die mechanische Kurvensteuerung ist aber insbesondere für die geringen Stückzahlen, die im professionellen Videobereich erwartet werden, wesentlich kostengünstiger. Die Kurvensteuerung läßt sich insbesondere vorteilhaft mit einem speziell geschnittenen Gewinde durchführen.

In einer weiteren vorzugsweisen Ausgestaltung ist das Linsensystem gegen Farbfehler und Verzeichnungen korrigiert.

Da erfindungsgemäß keine f (θ)- Linse im Linsensystem verwendet werden muß, läßt sich eine derartige Korrektur erfahrungsgemäß durchführen. Durch die Optimierung von Teillinsensystemen unter Minimierung von Farbfehlern des gesamten Linsensystems wird die Bildqualität deutlich verbessert.

Die Erfindung wird nachfolgend anhand der Zeichnung beispielshalber noch näher erläutert. Es zeigen:

Fig. 1 eine schematische Darstellung eines erfindungsgemäßen Videosystems mit einem Linsensystem variabler Brennweite;

Fig.2 eine schematische Darstellung eines Linsensystems zur Änderung der Bildgröße gemäß einem ersten Ausführungsbeispiel der Erfindung,

Fig.3 eine schematische Darstellung eines Linsensystems zur Änderung der Bildgröße gemäß einem anderen Ausführungsbeispiel der Erfindung,

Fig 4 ein bevorzugtes Ausführungsbeispiel des Linsensystems nach dem in Fig. 3 dargestellten Prinzip in verschiedenen Positionen a, b, c zur Veranschaulichung der Brennweitenverstellung.

Bei dem Videosystem aus Fig. 1 werden zur Steuerung von Farbton und Helligkeit drei Lichtquellen 10, 20, 30 eingesetzt, die im wesentlichen parallele Lichtbündel 12, 22, 32 erzeugen. Hierfür eignen sich insbesondere Laser. Es ist jedoch auch denkbar, andere Lichtquellen, beispielsweise LEDs, einzusetzen, bei denen die Lichtbündel mit Hilfe einer Optik parallelisiert werden. Die Optik kann dabei beispielsweise jeweils aus einer Linse bestehen, in deren Brennpunkt das jeweilige LED angeordnet ist. Zusätzlich könne auch Blenden zur Strahlbegrenzung vorgesehen werden. Zur Steuerung der Intensität der Lichtquellen 10, 20, 30 werden die Spannungen an den LEDs verändert. Als besonders vorteilhaft stellen sich dabei möglichst punktformige LEDs dar.

Im Beispiel von Fig. 1 sind für die Lichtquellen 10, 20, 30 Edelgaslaser vorgesehen. Da deren Intensität für ein Videobild nicht schnell genug verändert werden kann, werden die Lichtquellen 10, 20, 30 mit konstanter Lichtleistung betrieben und die Änderung der Lichtintensität erfolgt durch zusätzliche Modulatoren 14, 24, 34, für die sich insbesondere DKDP- Kristalle eignen, wie dies aus dem Stand der Technik bekannt ist.

Die einzelnen Lichtbündel 12, 22, 32 werden weiter durch dichroitische Spiegel 16, 26. 36 zu einem gemeinsamen Lichtbündel 40 zusammengeführt, welches innerhalb des Videosystems alle Lichtbündel vereint und in einem

einzigen Strahlengang durch das Videogerät hindurchläuft.

Zur Bilderzeugung wird eine Ablenkeinrichtung eingesetzt, über welche die einzelnen Bildpunkte des Videobildes sequentiell aufgebaut werden können. Man könnte nun das gemeinsame Lichtbundel 40 allein durch die Ablenkeinrichtung auf einen Bildschirm 54 ablenken. Um aber eine besondere Kompaktheit des gesamten Videosystems zu erreichen und den zur Verfügung stehenden Platz vorteilhaft auszunutzen, ist es auch möglich, verschiedenen Einheiten des Projektionssystems an optisch nicht geradlinig miteinander verbindbaren Orten anzubringen, wobei dann das Lichtbündel 40 umgelenkt werden muß Eine solche Umlenkung wird beispielhaft in Fig. 1 mit Hilfe eines Spiegels 42 durchgeführt mit dem das Lichtbündel auf die Ablenkeinrichtung gelenkt wird

Die Ablenkeinrichtung im Ausführungsbeispiel von Fig. 1 besteht aus einem Polygonspiegel 44 und einem Schwenkspiegel 46. Der Polygonspiegel 44 wird kontinuierlich gedreht, wodurch das Lichtbundel 40 durch die Folge der Polygonfläche zeilenmaßig abgelenkt wird. Der Schwenkspiegel 46 wird um eine Achse 48 hin- und hergeschwenkt und dient zum bildmäßigen Rastern. Zur Schivenkung und Synchronisation ist eine aus dem Stand der Technik bekannte Elektronik vorgesehen.

Das bild- und zeilenmäßig gerasterte Lichtbündel 40 wird durch ein Linsensystem 50 geführt, dessen Wirkungsweise weiter unten dargestellt wird. Dieses Linsensystem 50 verändert variabel den Ablenkwinkel und damit die Bildgröße.

Nach Verlassen des Linsensystems 50 wird das Lichtbündel 40 auf eine Fresnellinse 52 und danach auf den Bildschirm 54 geworfen, auf dem es von einem Betrachter in Pfeilrichtung als Bildpunkt eines Videobildes sichtbar wird. Bei den eingangs genannten Großprojektionsgeräten mit stark unterschiedlichen Anforderungen an die Bildgröße wird man allerdings auf die Fresnellinse 52 im allgemeinen verzichten, da im wesentlichen nur große Abstände zwischen Bildschirm 54 und der Rastereinrichtung zu berücksichtigen sind und die einzige Funktion der Fresnellinse darin besteht, bei geringem Abstand des Linsensystems 50 zum Bildschirm 54, auch Lichtbündel 40 mit sehr großem Winkel zum Bildschirm 54 in definierte Richtung zum Beobachter zu lenken.

Die folgenden Figuren beziehen sich im wesentlichen auf das Linsensystem 50. Der optischen Achse des Linsensystems 50 wird dabei im folgenden immer das Bezugszeichen 61 zugeordnet.

Im Ausführungsbeispiel der Fig. 2 ist auf der optischen Achse 61 ein dickerer Punkt 62 eingezeichnet Dieser bezeichnet die Eintrittspupille der nachfolgenden Optik. Wie im Zusammenhang mit Fig. ] schon beschrieben wurde, verändert die Ablenkeinrichtung bei Videosystemen, den Winkel des Lichtbündels 40 zur optischen Achse beim Rastern kontinuierlich. Die verschieden abgelenkten Lichtbündel 40 können dabei als im wesentlichen von einem Punkt ausgehend betrachtet werden. Dieser ist durch die Lage der Spiegel bestimmt, mit denen ein einfallendes Lichtbündel zeitlich unter unterschiedlichem Winkel reflektiert wird.

Diese etwas vereinfachte Sichtweise entspricht aber nur in grober Näherung der Wirklichkeit Bei Ablenkungen über separate Spiegel 48 und 44 verschiebt sich dieser Ort auch während des Rasterns eines Bildes örtlich Der einzige Ablenkort, wie er im folgenden vereinfacht betrachtet werden soll und der hier durch den Punkt 62 repräsentiert ist, ist also in der Praxis über einen räumlich begrenzten Bereich zur Ablenkung zu ersetzen. Dadurch ergeben sich kleine Anderungen in der Dimensionierung bei den nachfolgenden Beispielen Aufgrund seiner Fachkenntnisse kann der Fachmann jedoch die sich aus der prinzipiellen Darstellung ergebenden Erkenntnisse auch für Linsensysteme übertragen, bei denen der räumliche Bereich zur Ablenkung nicht nur in einem einzigen Punkt 62 vereinigt ist. Außerdem wird in Verbindung mit Fig. 4 ein vollständig dimensioniertes Ausführungsbeispiel für diese Anwendungen angegeben, das es dem Fachmann weiter erlaubt, die im folgenden dargestellten Eigenschaften der Erfindung für die Praxis zu übernehmen.

Fig. 2 zeigt außerdem eine Linse 63, durch die ein unter einem Winkel vom Punkt 62 ausgehendes Lichtbündel 64 abgelenkt wird. Der dingseitige Brennpunkt der Linse 63 liegt am gleichen Ort wie der Punkt 62. Deswegen verläßt das Lichtbündel 64 die Linse 63 parallel zur optischen Achse 1.

Da das ausgehende Lichtbündel 64 die Optik parallel zur optischen Achse 61 verläßt, ist die Bildgröße bei diesem Beispiel vom Abstand des Bildschirms unabhängig.

Die Größe des Bildes hängt wesentlich von der Brennweite der Linse ab. Dies ist deutlich aus Fig. 2 erkennbar, in der mit unterbrochenen Linien eine Linse 63' mit kürzerer Brennweite eingezeichnet ist. Diese ist wieder so angeordnet, daß ihr dingseitiger Brennpunkt im Punkt 62 liegt.

Aufgrund der größere Nahe der Linse 63' im Vergleich zur Linse 63 verläuft das Lichtbündel 64', welches mittels einer unterbrochenen Linie dargestellt ist, näher an der optischen Achse 1. Das Bild ist also kleiner. Dabei haben die Lichtbündel 64 und 64' die gleichen Eigenschafien, beide verlaufen parallel zur optischen Achse.

Die Größe der Bilder kann durch Einfahren verschiedener Linsen 63, 63' in den Strahlengang des Lichtbundels 64 mittels eines Revolvers verändert werden. Für die Position der Linsen im Revolver ist jedoch zur Einhaltung der gleichen Abbildungsbedingung sicherzustellen, daß der dingseitiger Brennpunkt immer am gleichen Ort liegt, damit die Richtungen der ausgehenden Lichtbündel unabhängig von der eingestellten Vergrößerung unverändert bleiben.

Statt mehrere Linsen in einem Revolver vorzusehen, kann man auch eine Variooptik einsetzen, also ein Linsensystem, welches es gestattet, Linsen 63 mit kontinuierlich einstellbarer Brennweite nachzubilden. Bei der Verstellung der Brennweite ist aber zweckmäßigerweise darauf zu achten, daß der dingseitige Brennpunkt ortsfest am Punkt 62 festgehalten wird, damit die Abbildungsbedingung bei Größenverstellung nicht beeinträchtigt wird. Da derartige Variooptiken auch eine sehr große räumliche Ausdehnung entlang der optischen Achse aufweisen, ist die erreichbare Vergrößerung, die, wie aus Fig. 2 ersichtlich, wesentlich von dem Abstand der Linse 63 vom Punkt 62 abhängt, auch durch diese Abmessungen begrenzt. Diesen Bereich kann man dadurch verändern, daß zwischen dem Punkt 62 und der Linse 63 veränderlicher Brennweite noch eine Feldlinse oder eine Feldlinsengruppe eingefügt wird, die auf optischem Wege den Abstand des Punktes 62 zu der Linse 63 verkürzt oder verlängert. Der Aufbau derartiger Variooptiken und Feldlinsen wird im Zusammenhang mit dem Ausführungsbeispiel von Fig. 4 noch näher verdeutlicht.

Die Bildgröße im Beispiel von Fig. 2 ist wesentlich durch die Abmessungen der Linse 63 begrenzt. Für praktische Anwendungen kann dies jedoch nicht als absolute Begrenzung angesehen werden, da man mit weiteren Linsensystemen, beispielsweise konstanter Vergrößerung, das durch die Optik gemäß Fig. 2 erzeugte Bild noch weiter vergrößern kann, bevor es auf einem Bildschirm 52 zur Darstellung gelangt.

Im Ausführungsbeispiel von Fig. 3 ist eine andere Anordnung gezeigt, bei der die erreichbare Bildgröße auch vom Abstand des Bildschirms 54 abhängt Dabei bildet eine Linse 65 das Lichtbündel 64 erst in eine Zwischenbildebene 66 ab Der dingseitige Brennpunkt der Linse 65 liegt für eine scharfe Abbildung der durch den Punkt 62 gehenden Lichtbündel wieder im Punkt 62, während als Zwischenbildebene 66 zweckmäßigerweise die bildseitige Brennebene der Linse 65 gewählt wird, damit auf der Zwischenbildebene 66 ein scharfes Bild entsteht.

Bei der oben angesprochenen Problematik der Ablenkung in zwei Punkten für zwei Raumrichtungen ist die scharfe Abbildung aber nicht für beide Ablenkrichtungen in gleicher Weise gegeben In diesem Fall wird man. damit in beiden Ablenkrichtungen die Scharfe des Bildes gleich ist, den dingseitigen Brennpunkt der Linse 65 in den raumlichen Bereich zur Ablenkung legen.

Fur praktische Anwendungen bei Videosystemen hat sich gezeigt, daß die Entfernung des Punktes 68 gegenüber dem bildseitigen Brennpunkt der Linse 65 auf der optischen Achse geringer als 10% der Brennweite der Linse 65 sein kann. Ähnliche Bedingungen ergeben sich auch bei Verwendung von Linsensystemen anstelle beispielhaft betrachteter einzelner Linsen 65 und 63.

Der weitere in Fig. 3 dick eingezeichnete Punkt 68 ergibt sich als Durchstoßpunkt der optischen Achse 61 mit der Zwischenbildebene 66. Auf diesen Punkt wird in diesem Ausführungsbeispiel der dingseitige Brennpunkt der nachfolgenden Linse 63 oder 63' festgelegt, d. h. die Position der Linse 63 bzw. 63' wird in Abhängigkeit von ihrer Brennweite gewählt.

In Fig. 3 sind auch wieder die beiden von den Linsen mit unterschiedlicher Brennweite 63 und 63' ausgehenden Lichtbündel 64 und 64' angedeutet. Man erkennt, daß die Winkel der ausgehenden Lichtbündel 64 und 64', je nachdem ob als zweite Linse die Linse 63 oder die Linse 63' ausgewählt wird, verschieden sind. Das auf einem Bildschirm erzeugte Bild ist also in der Größe veränderlich. Im Unterschied zu Fig. 2, verlaufen die von dem Linsensystem nach Fig. 3 ausgehenden Lichtbündel jedoch nicht parallel, sondern unter einem durch die Abbildungseigenschaften des Linsensystems definierten Winkel.

Aufgrund der beschriebenen Bedingungen für die Lage der Brennpunkte der Linsen 65 und 63 oder 63' zeigt das Beispiel der Fig. 3 ein im wesentlichen afokales optisches System. Es handelt sich dabei jedoch nicht um ein exaktes, klassisches afokales optisches System, da, wie schon dargestellt, die Zwischenbildebene 66 nicht exakt mit der bildseitigen Brennebene der Linse 65 übereinstimmen muß, sondern ihre Lage im wesentlichen durch die räumliche Ausdehnung des räumlichen Bereichs zur Ablenkung mitbestimmt ist.

Die erzeugte Bildgröße ist vom Abstand des Projektionssystems von dem Bildschirm abhangig. Aufgrund der Wahl des dingseitigen Brennpunkts der Linse 63 bzw. 63' bleibt ein paralleles, durch den Punkt 62 gehendes Lichtbündels im wesentlichen parallel Daraus erkennt man, daß bei allen Abständen des Bildschirms ein scharfes Bild erzeugt wird Spezielle Einrichtungen zur Nachstellung der Schärfe erübrigen sich daher.

Im Vergleich von Fig. 2 und 3 fällt auf, daß sich das Bild im Ausführungsbeispiel von Fig. 3 bei Verringerung der Brennweite der Linse 63 vergrößert, während es sich bei dem Ausführungsbeispiel nach Fig. 2 verkleinert. Die räumlichen Begrenzungen bei einer Optik nach Fig. 2 wirken sich daher unterschiedlich aus. Im Ausführungsbeispiel gemäß Fig. 2 wird die kleinste erreichbare Bildgröße aufgrund mechanischer Randbedingungen festgelegt, während im Ausführungsbeispiel von Fig. 3 die Bildgröße jedoch auch wesentlich vom Abstand zwischen Bildschirm und Linsensystem abhängt. Deswegen ermöglicht das Ausführungsbeispiel nach Fig. 3 für dieses Anwendungsgebiet einen größeren Bereich für die Einstellung der Bildgröße.

Wie Modellrechnungen zeigten, läßt sich das im wesentlichen afokale System gemäß Fig. 3 auch bezüglich Verzeichnungsfreiheit und der Minimierung chromatischer Fehler besser korrigieren als das Ausführungsbeispiel nach Fig. 2. Außerdem läßt sich aufgrund geometrisch optischer Überlegungen feststellen, daß das Lichtbündel 64 bzw. 64' besser fokussiert wird und bei großen Bildern eine erhöhte Bildschärfe ermöglicht.

Auch im Beispiel von Fig. 3 kann die Verstellung der Brennweite und Position der Linse 63 zu der der Linse 63' wieder mit Hilfe von Linsen in einem Revolver oder einem Varioobjektiv erfolgen. Der Einsatz von Feldlinsen in einem derartigen Varioobjektiv zur Vergrößerung, um den Bereich für die erreichbaren Vergrößerungen anzupassen,

wird im folgenden in einem in Fig 4 gezeigten Ausführungsbeispiel dargestellt.

In Fig. 4 sind in den Teilfiguren a, b, c drei verschiedenen Linsenstellungen gezeigt, aus denen die Veränderung der Brennweite und damit der Bildgröße deutlicher wird. Das dargestellte Linsensystem 50 wurde beim Ausführungsbeispiel von Fig. 1 eingesetzt. Es ist auf Veränderungen der Bildgröße im Bereich $1/\sqrt{3}$ bis $\sqrt{3}$ ausgelegt, was fur den Einsatzbereich in der Großprojektion üblicherweise ausreicht.

Beim Vergleich der Fig. 4 mit Fig. 3 bezüglich der Lage der Zwischenbildebene 66 erkennt man, daß die Funktion der Linse 65 in diesem Beispiel durch eine Systemstufe 70 des Linsensystems 50 nachgebildet wird Aus dem Verlauf der beiden schematisch eingezeichneten Lichtbündel 40, 40', wobei letzteres längs der optischen Achse verläuft, ist weiter deutlich zu erkennen, daß dieses durch die Systemstufe 70 auf die Zwischenbildebene 66 fokussiert wird.

Hinter der Zwischenbildebene 66 folgt dann eine aus zwei Feldlinsen 72 und 74 bestehende Feldlinsengruppe 76. Diese wurde eingefügt, um die Zwischenbildebene 66 bezüglich der Systemstufe 70 optisch in eine größere Entfernung zu legen, damit die Bildgrößenverstellung auf den gewünschten Bereich angepaßt wird. Außerdem erlaubt der Einsatz der Feldlinsengruppe 72 und 74 eine besonders kompakte Bauweise. Dies hat nicht nur Vorteile bezüglich der Handhabung des Linsensystems 50, sondern paßt das Linsensystems auch besser auf die eingangs genannte Näherung aufgrund der Linsengleichung an.

Die bezüglich des Strahlengangs der Lichtbündel 40 und 40' nachfolgende Stufe stellt ein Teillinsensystem 78 mit variabler Brennweite dar. Das Teillinsensystem 78 besteht in diesem Ausführungsbeispiel nur aus zwei zueinander verstellbaren Linsengruppen, den Variator 80 und den Kompensator 82. Wie aus dem Vergleich der drei Teilfiguren a, b, c ersichtlich ist, werden bei Änderung der Vergrößerung nicht nur Kompensator 82 und Variator 80 zueinander, sondern auch das gesamte Teillinsensystem 78 relativ zur Feldlinsengruppe 76 verschoben.

Die Radien, Brechungsindizes N, Abstände zwischen den Flächen und die aus einer mittleren Brechzahl und der Grunddispersion abgeleitete Abbesche Zahl ν des Linsensystems 50 des Ausführungsbeispiels von Fig. 4 sind im einzelnen in der Tabelle I im Anhang aufgeführt. Die Flächennummern in der Tabelle beziehen sich dabei auf die Bezugszeichen 91 bis 116 in Fig 4. Wenn als Brechungsindex 1,0 angegeben ist und die Angabe der Abbeschen Zahl ν fehlt, handelt es sich um eine Luftstrecke.

Mit den angegebenen Werten ergibt sich für die erste Stufe eine Brennweite von 48, 89 mm. Die Gesamtbrennweite der Feldlinsengruppe 76 mit Variator 80 und Kompensator 82 variiert mit der Stellung des Variators 80 und dem Kompensator 82. In Tabelle II sind einige Werte für verschiedene Stellungen 1 bis 5 angegeben. Die Stellungen 1, 3 und 5 entsprechen dabei den in Fig. 4 gezeigten Teilfiguren a, b und c.

Das Ausführungsbeispiel nach Fig. 4 ist ein im wesentlichen afokales Linsensystem Das bedeutet, die Brennpunkte der ersten Stufe 70 und des aus Feldlinsengruppe 76. Variator 80 und Kompensator 82 bestehenden Linsensystems liegen nahe bei der Zwischenbildebene 66. Die Vergrößerung ergibt sich bei derartigen Linsensystemen aus dem Verhältnis der Brennweiten. Die Brennweite des aus Feldlinsengruppe 76, Variator 80 und Kompensator 82 bestehenden Linsensystems ist für die verschiedenen Stellungen in der ebenfalls im Anhang befindlichen Tabelle II angegeben.

Die Lageveränderung von Kompensator 82 und Variator 80 erfolgt durch Drehung in entsprechend der optischen Erfordernisse speziell geschnittenen Gewinden. Dabei wurde das Gewinde für die Verstellung des Variators $h_v$ für das Ausführungsbeispiel so gewählt, daß diese über die Beziehung

$$h_v = 0,326922\varphi; \qquad (\varphi = 0\text{-}260°)$$

vom Drehwinkel φ des Variators abhängt.

Die Verschiebung des Kompensators $h_k$ wird bei der Drehung automatisch gemäß der Beziehung

$$h_k = \frac{\dfrac{h_v^2}{r}}{1 + \left[1 - (1-k)\left(\dfrac{h_v^2}{r}\right)^2\right]^{1/2}} + c_2\left(\frac{h_v}{85}\right)^4 + c_3\left(\frac{h_v}{85}\right)^6 + c_4\left(\frac{h_v}{85}\right)^8 + c_5\left(\frac{h_v}{85}\right)^{10}$$

mit den Konstanten

r= 26, 44781 ,

k= 2, 68835 ,
c2= 20, 5846 ,
c3= -30, 6030 ,
c4= 22, 0388 und c5= -6, 2021

nachgeführt. Aufgrund der geschnittenen Gewinde für $h_v$ und $h_k$ wird die Bildgröße mit einer einzigen Drehung eines geeigneten Verstelltriebs z.B in Form einer Kulissenführung eingestellt. Alle Angaben beziehen sich auf eine Dimensionierung in Millimetern.

Das in Fig. 4 dargestellte Ausführungsbeispiel wurde bei einem Videosystem nach Fig. 1 eingesetzt. Es zeigte sich, daß sich in dem verfügbaren Bereich, eine große Variationsmöglichkeit für den professionellen Einsatz zur Großprojektion Videobildern gegeben ist. Beim Einsatz des Linsensystems 50 wurde auch festgestellt, daß die mit dem Videogerät nach Fig. 1 erzeugten Videobilder ohne Verzeichnungen und Farbfehler unabhängig von der Bildgröße dargestellt werden konnten.

Anhang

Tabelle 1

| Flächen nummer | Krümmungs radius (mm) | zwischen den Flächen | D (mm) | N | ν |
|---|---|---|---|---|---|
| 91 | 101 | 91- 92 | 4 | 1,7343 | 28,2 |
| 92 | 35 | 92- 93 | 10 | 1,6225 | 63,2 |
| 93 | -94 | 93- 94 | 0,5 | 1,0 | |
| 94 | 44 | 94- 95 | 6 | 1,6225 | 63,2 |
| 95 | 162 | 95- 96 | 0.5 | 1,0 | |
| 96 | 24 | 96- 97 | 10 | 1,6225 | 63,2 |
| 97 | 55 | 97- 98 | 3 | 1,5343 | 48,5 |
| 98 | 14 | 98- 99 | 22 | 1,0 | |
| 99 | ∞ | 99-100 | 42 | 1,0 | |
| 100 | 44 | 100-101 | 5 | 1,5421 | 59,4 |
| 101 | -88 | 101-102 | 15 | 1,0 | |
| 102 | 62 | 102-103 | 2 | 1,5848 | 40,6 |
| 103 | 24 | 103-104 | variabel | 1,0 | |
| 104 | 54 | 104-105 | 10 | 1,5187 | 64,0 |
| 105 | -20 | 105-106 | 2 | 1,7923 | 47,2 |
| 106 | -55 | 106-107 | 8 | 1,0 | |
| 107 | 87 | 107-108 | 2 | 1,5848 | 40,6 |
| 108 | 16 | 108-109 | 10 | 1,5544 | 63,2 |
| 109 | -40 | 109-110 | variabel | 1,0 | |
| 110 | -200 | 110-111 | 8 | 1,7617 | 27,4 |
| 111 | -28 | 111-112 | 2 | 1,5187 | 64,0 |
| 112 | 18 | 112-113 | 15 | 1,0 | |
| 113 | -17 | 113-114 | 3 | 1,7923 | 47,2 |
| 114 | -37 | 114-115 | 0,5 | 1,0 | |
| 115 | 137 | 115-116 | 5 | 1,6539 | 55,6 |
| 116 | -80 | | | | |

Tabelle II

| Stellung Nr | D (mm) zwischen Flächen 103, 104 | D (mm) zwischen Flächen 109, 110 | Brennweite (mm) Flächen 100-116 |
|---|---|---|---|
| 1 | 96,7 | 5,9 | 84,9 |
| 2 | 65,4 | 10,2 | 63,5 |

Tabelle II (fortgesetzt)

| Stellung Nr | D (mm) zwischen Flächen 103, 104 | D (mm) zwischen Flächen 109, 110 | Brennweite (mm) Flächen 100-116 |
|---|---|---|---|
| 3 | 43,0 | 15,6 | 48,2 |
| 4 | 24,8 | 23,4 | 35,8 |
| 5 | 12,2 | 33,0 | 27,2 |

## Patentansprüche

**1.** Verfahren zum Abbilden von Bildpunkten eines Videobildes mit Hilfe eines bezüglich der Helligkeit der Bildpunkte intensitätsmäßig gesteuerten Lichtbündels (40, 40'; 64, 64' ), das abgelenkt und danach mit einer Linse (63, 63') oder einem Linsensystem (50) auf einen Bildschirm (54) geworfen wird, **dadurch gekennzeichnet**,
daß für die Linse (63, 63'), das Linsensystem (50) oder ein Teillinsensystem (78) des Linsensystems (50) eine variable Brennweite vorgesehen und bei Variation der Brennweite ein dingseitiger Brennpunkt ortsfest gehalten wird.

**2.** Verfahren nach Anspruch 1, dadurch gekennzeichnet,
daß der ortsfest gehaltene dingseitige Brennpunkt innerhalb eines räumlich ausgedehnten Bereichs (44, 46), in dem die Ablenkung erfolgt, oder bei einem Teillinsensystem in einer Ebene (66) im Strahlengang des Linsensystems (50), in dem das Lichtbündel (40, 40'; 64, 64' ) fokussiert ist, festgehalten wird.

**3.** Verfahren nach Anspruch 1 oder 2, dadurch gekennzeichnet,
daß der dingseitige Brennpunkt ortsfest gehalten wird, indem die Linse (63, 63'), das Linsensystem (50) oder das Teillinsensystem (78) bei Veränderung der Brennweite in ihrer Position verändert wird.

**4.** Vorrichtung zum Abbilden von Bildpunkten eines Videobildes auf einem Bildschirm (54), insbesondere zum Durchführen mindestens eines der Verfahren nach Anspruch 1 bis 3 mit einer Ablenkeinrichtung, die ein bezüglich der Helligkeit der Bildpunkte intensitätsmäßig angesteuertes Lichtbündel (40, 40'; 64, 64' ) zum zeilen- und bildmäßigen Rastern auf einen Bildschirm (54) ablenkt, und mit einer Linse (63, 63') oder einem Linsensystem (50) zwischen der Ablenkeinrichtung und dem Bildschirm (54), **dadurch gekennzeichnet**,
daß die Linse (63, 63'), das Linsensystem (50) oder ein Teillinsensystem (78) des Linsensystems (50) in der Brennweite verstellbar sind und eine Einrichtung vorgesehen ist, die bei Verstellung der Brennweite einen dingseitigen Brennpunkt der Linse (63. 63') oder des Teillinsensystems (78) ortsfest hält.

**5.** Vorrichtung nach Anspruch 4, dadurch gekennzeichnet,
daß die Einrichtung den dingseitigen Brennpunkt innerhalb eines Bereichs der Ablenkeinrichtung (44, 46) oder in einer Ebene im Strahlengang des Linsensystems (50), in dem das Lichtbündel (40, 40'; 64, 64' ) fokussierbar ist, festhält.

**6.** Vorrichtung nach Anspruch 4 oder 5, dadurch gekennzeichnet,
daß die Linse (63, 63'), das Linsensystem (50) oder das Teillinsensystem (78) des Linsensystems (50) eine kontinuierlich verstellbare Brennweite haben.

**7.** Vorrichtung nach mindestens einem der Ansprüche 4 bis 6, dadurch gekennzeichnet,
daß das Linsensystem (50) ein im wesentlichen afokales Linsensystem ist,

**8.** Vorrichtung nach mindestens einem der Ansprüche 4 bis 7, dadurch gekennzeichnet,
daß das Linsensystem (50) mehrstufig ist und die erste Stufe (70) in konstantem Abstand zur Ablenkeinrichtung angeordnet ist, wobei mindestens eine der anderen Stufen eine variable Brennweite hat und gegenüber der ersten Stufe (70) verschiebbar angeordnet ist.

**9.** Vorrichtung nach Anspruch 8, dadurch gekennzeichnet,
daß das Linsensystem (50) so ausgestaltet ist, daß das Videobild vor der Linse (63, 63') oder vor dem Teillinsensystem (78) mit der variablen Brennweite in eine Zwischenbildebene abbildbar und die Linse (63, 63') oder das Teillinsensystem (78) mit der variablen Brennweite mit Hilfe der Einrichtung so verschiebbar ist, daß deren dingseitiger Brennpunkt im wesentlichen auf einer optischen Achse (61) des Linsensystems (50) nahe bei oder in der

Zwischenbildebene (66) liegt.

**10.** Vorrichtung nach Anspruch 9, dadurch gekennzeichnet, daß zwischen der Zwischenbildebene und dem Teillinsensystem (78) mit variabler Brennweite eine Feldlinse (72, 74) oder Feldlinsengruppe (76) angeordnet ist.

**11.** Vorrichtung nach mindestens einem der Ansprüche 7 bis 10, dadurch gekennzeichnet, daß bei dem mehrstufigen afokalen Linsensystem (50) die letzte Stufe (78) als Linse (63, 63') oder Teillinsensystem (78) mit variabler Brennweite ausgebildet ist.

**12.** Vorrichtung nach mindestens einem der Ansprüche 4 bis 11, dadurch gekennzeichnet, daß das Teillinsensystem (78) oder das Linsensystem (50) variabler Brennweite zwei gegeneinander verschiebbare Systemstufen (80, 82) aufweist, mit denen die Brennweite verstellbar ist und ein Bewegungsmechanismus vorgesehen ist, der so ausgestaltet ist, daß der dingseitige Brennpunkt bei Änderung der Brennweite ortsfest bleibt.

**13.** Vorrichtung nach Anspruch 12, dadurch gekennzeichnet, daß für die Bewegung der einen Systemstufe (80) gegenüber der anderen Systemstufe (82) eine mechanische Kurvensteuerung vorgesehen ist.

**14.** Vorrichtung nach mindestens einem der Ansprüche 4 bis 13, dadurch gekennzeichnet, daß das Linsensystem (50) gegen Farbfehler und Verzeichnungen korrigiert ist.

**Claims**

**1.** Process for portraying pixels of a video image by means of a beam of light (40, 40', 64, 64') of which the intensity is controlled with respect to the brightness of the pixels, which is deflected and then shed by a lens (63, 63') or a lens system (50) onto a screen (54), characterised in that a variable focal length is provided for the lens (63, 63'), the lens system (50) or a partial lens system (78) of the lens system (50) and an object-side focal point is kept stationary when the focal length is varied.

**2.** Process according to claim 1, characterised in that the object-side focal point which is kept stationary is kept within a spatially extensive region (44, 46) in which deflection takes place or, in the case of a partial lens system, in a plane (66) in the ray path of the lens system (50) in which the beam of light (40, 40', 64, 64') is focused.

**3.** Process according to claim 1 or 2, characterised in that the object-side focal point is kept stationary in that the lens (63, 63'), the lens system (50) or the partial lens system (78) is changed in position with a change in focal length.

**4.** Apparatus for portraying pixels of a video image on a screen (54), in particular for carrying out at least one of the processes according to claims 1 to 3, with a deflection device which deflects a beam of light (40, 40', 64, 64') of which the intensity is controlled with respect to the brightness of the pixels for line-wise and image-wise scanning on a screen (54) and with a lens (63, 63') or a lens system (50) between the deflection device and the screen (54), characterised in that the lens (63, 63'), the lens system (50) or a partial lens system (78) of the lens system (50) are adjustable in focal length and a device is provided which keeps an object-side focal point of the lens (63, 63') or of the partial lens system (78) stationary on adjustment of the focal length.

**5.** Apparatus according to claim 4, characterised in that the device keeps the object-side focal point within a range of the deflection device (44, 46) or in a plane in the ray path of the lens system (50) in which the beam of light (40, 40', 64, 64') can be focused.

**6.** Apparatus according to claim 4 or 5, characterised in that the lens (63, 63'), the lens system (50) or the partial lens system (78) of the lens system (50) have a continuously adjustable focal width.

**7.** Apparatus according to at least one of claims 4 to 6, characterised in that the lens system (50) is a substantially afocal lens system.

**8.** Apparatus according to at least one of claims 4 to 7, characterised in that the lens system (50) has several stages and the first stage (70) is arranged at a constant distance from the deflection device, at least one of the other

stages having a variable focal length and being arranged displaceably in relation to the first stage (70).

9. Apparatus according to claim 8, characterised in that the lens system (50) is so designed that the video image can be portrayed in an intermediate image plane in front of the lens (63, 63') or in front of the partial lens system (78) with the variable focal length and the lens (63, 63') or the partial lens system (78) with the variable focal length can be displaced by means of the device such that its object-side focal point lies substantially on an optical axis (61) of the lens system (50) close to or in the intermediate image plane (66).

10. Apparatus according to claim 9, characterised in that a field lens (72, 74) or group of field lenses (76) is arranged between the intermediate image plane and the partial lens system (78) with a variable focal length.

11. Apparatus according to at least one of claims 7 to 10, characterised in that, in the multi-stage afocal lens system (50), the last stage (78) is designed as a lens (63, 63') or partial lens system (78) with a variable focal length.

12. Apparatus according to at least one of claims 4 to 11, characterised in that the partial lens system (78) or the lens system (50) with a variable focal length comprises two system stages (80, 82) which are displaceable relative to one another and with which the focal length can be adjusted, and a moving mechanism is provided which is so designed that the object-side focal point remains stationary when the focal length is changed.

13. Apparatus according to claim 12, characterised in that a mechanical cam controller is provided for moving one system stage (80) in relation to the other system stage (82).

14. Apparatus according to at least one of claims 4 to 13, characterised in that the lens system (50) is corrected with respect to colour defects and distortion.

**Revendications**

1. Procédé de reproduction de points d'image d'une image vidéo à l'aide d'un faisceau de lumière (40, 40' ; 64, 64') commandé en intensité pour la luminosité des points d'image, faisceau qui est dévié puis projeté sur un écran (54) au moyen d'une lentille (63, 63') ou d'un système de lentilles (50), caractérisé en ce que pour la lentille (63, 63'), le système de lentilles (50) ou un système partiel (78) du système de lentilles (50), il est prévu une distance focale variable et, en cas de variation de la distance focale, un foyer objet est maintenu stationnaire.

2. Procédé selon la revendication 1, caractérisé en ce que le foyer objet maintenu stationnaire est maintenu à l'intérieur d'une zone (44, 46), étendue dans l'espace, dans laquelle s'effectue la déviation, ou dans le cas d'un système partiel de lentilles il est maintenu dans un plan 66 dans le parcours des rayons du système de lentilles 50 dans lequel un faisceau de lumière (40, 40' ; 64, 64') est focalisé.

3. Procédé selon la revendication 1 ou 2, caractérisé en ce que le foyer objet est maintenu stationnaire, en ce que la lentille (63, 63'), le système de lentilles (50) ou le système partiel de lentilles (78) est modifié dans sa position en cas de variation de la distance focale.

4. Dispositif de reproduction de points d'image d'une image vidéo sur un écran (54), notamment pour la mise en oeuvre d'au moins l'un des procédés selon la revendication 1 à 3, comportant un dispositif de déviation qui dévie un faisceau de lumière (40, 40' ; 64, 64') commandé en intensité pour la luminosité des points d'image, en vue du balayage des lignes et de l'image sur un écran (54) et comportant une lentille (63, 63') ou un système de lentilles (50) entre le dispositif de déviation et l'écran (54), caractérisé en ce que la lentille (63, 63'), le système de lentilles (50) ou un système partiel (78) du système de lentilles (50) sont réglables dans leur distance focale et en ce qu'il est prévu un dispositifqui, en cas de réglage de la distance focale, maintient stationnaire un foyer objet de la lentille (63, 63') ou du système partiel de lentilles (78).

5. Dispositif selon la revendication 4, caractérisé en ce que le dispositif fixe le foyer objet à l'intérieur d'une zone du dispositif de déviation (44, 46) ou dans un plan dans le parcours des rayons du système de lentilles (50), dans lequel le faisceau de lumière (40, 40' ; 64, 64') peut être focalisé.

6. Dispositif selon la revendication 4 ou 5, caractérisé en ce que la lentille (63, 63'), le système de lentilles (50) ou le système partiel (78) du système de lentilles (50) ont une distance focale réglable en continu.

**7.** Dispositif selon l'une au moins des revendications 4 à 6, caractérisé en ce que le système de lentilles (50) est un système de lentilles sensiblement afocal.

**8.** Dispositif selon l'une au moins des revendications 4 à 7, caractérisé en ce que le système de lentilles (50) est à plusieurs étages et le premier étage (70) est disposé à distance constante du dispositif de déviation, l'un au moins des autres étages présentant une distance focale variable et étant disposé de manière à pouvoir être déplacé par rapport au premier étage (70).

**9.** Dispositif selon la revendication 8, caractérisé en ce que le système de lentilles (50) est tel que l'image vidéo peut être reproduite devant la lentille (63, 63') ou devant le système partiel (78) à distance focale variable, dans un plan d'image intermédiaire, et en ce que la lentille (63, 63') ou le système partiel (78) à distance focale variable, peut être déplacé à l'aide du dispositif de manière que son foyer objet se situe sensiblement sur un axe optique (61) du système de lentilles (50), à proximité du plan d'image intermédiaire (66) ou dans celui-ci.

**10.** Dispositif selon la revendication 9, caractérisé en ce qu'une lentille de champ (72, 74) ou un groupe de lentilles de champ (76) est disposé entre le plan d'image intermédiaire et le système partiel (78) à distance focale variable.

**11.** Dispositif selon l'une au moins des revendications 7 à 10, caractérisé en ce que dans le système de lentilles afocal (50) à plusieurs étages, le dernier étage (78) est réalisé sous la forme d'une lentille (63, 63') ou d'un système partiel (78) à distance focale variable.

**12.** Dispositif selon l'une au moins des revendications 4 à 11, caractérisé en ce que le système partiel (78) ou le système de lentilles (50) à distance focale variable comporte deux étages de système (80, 82) pouvant être déplacés l'un par rapport à l'autre, au moyen desquels la distance focale peut être réglée et en ce qu'il est prévu un mécanisme de déplacement qui est tel que le foyer objet reste stationnaire lorsque la distance focale varie.

**13.** Dispositif selon la revendication 12, caractérisé en ce que pour le déplacement d'un étage de système (80) par rapport à l'autre étage de système (82) il est prévu une commande mécanique à cames.

**14.** Dispositif selon l'une au moins des revendications 4 à 13, caractérisé en ce que le système de lentilles (50) est corrigé contre des défauts chromatiques et des distorsions d'image.

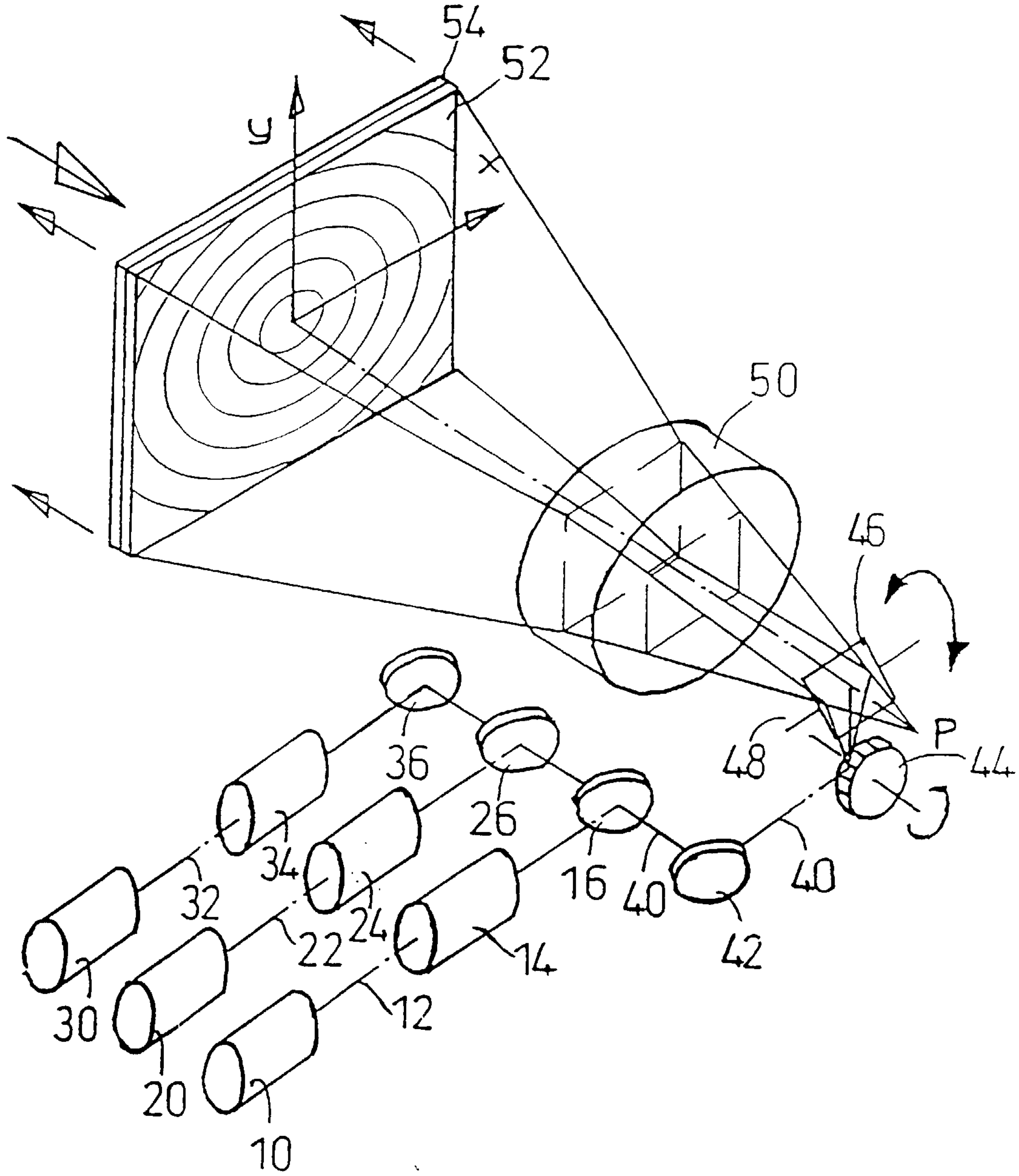


Fig.1

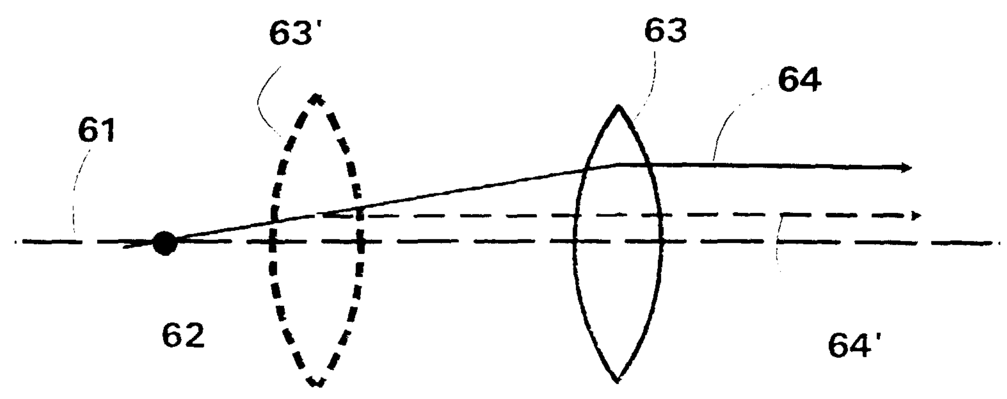


Fig. 2

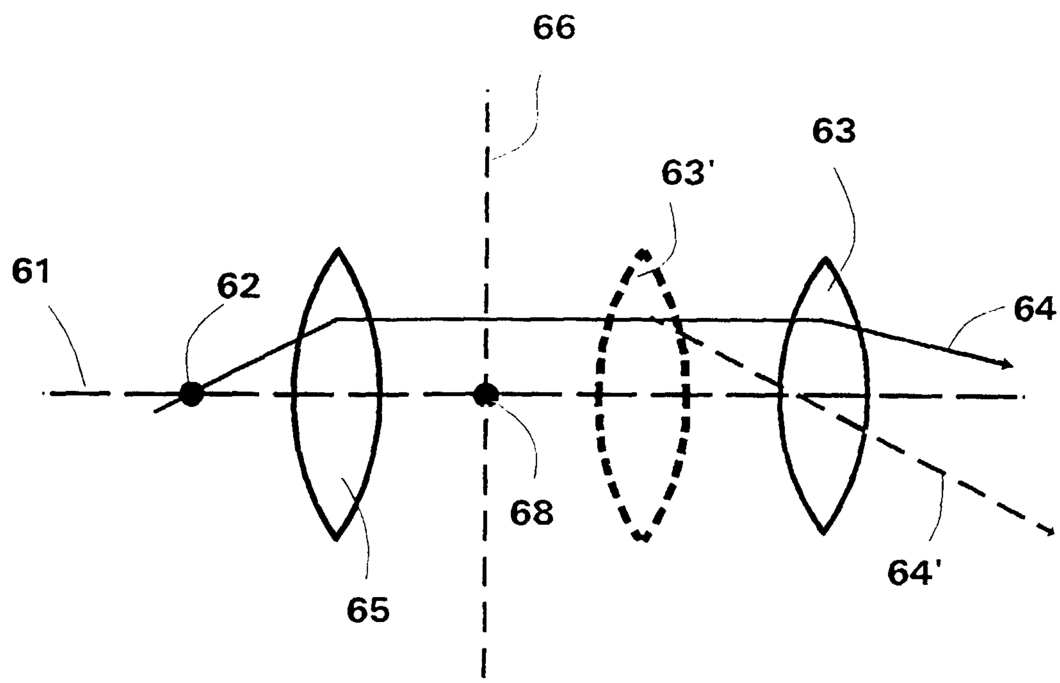


Fig. 3

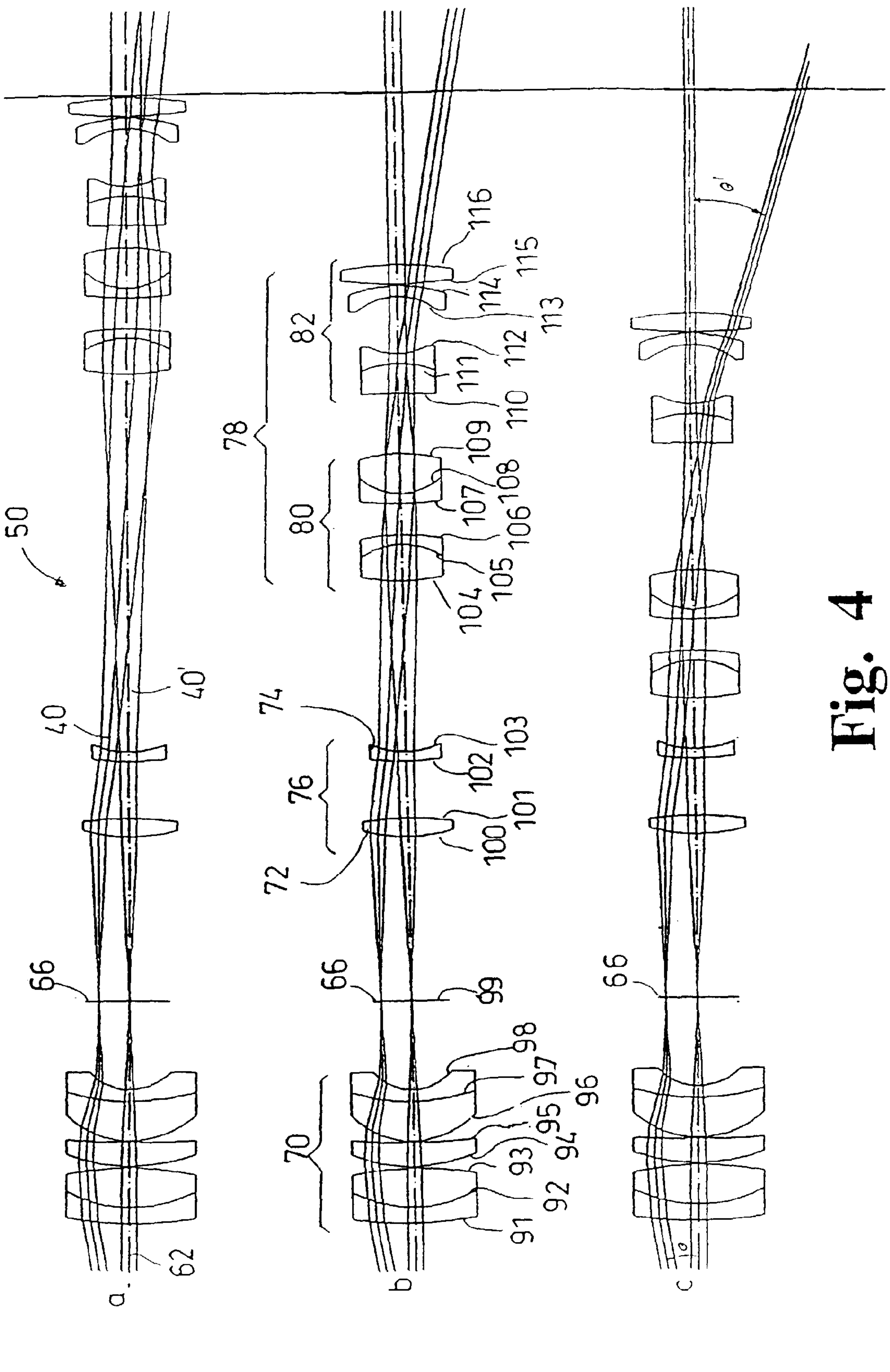
50
40
40'
62
66
66
99
66
70
91
92
93
94
95
96
97
98
72
74
76
100
101
102
103
78
80
82
104
105
106
107
108
109
110
111
112
113
114
115
116
a.
b
c

Fig. 4